# FASCICULE DE BREVET EUROPEEN

(11) **EP 1 996 445 B1**
(45) Date de publication et mention de la délivrance du brevet: **29.04.2009**
(21) Numéro de dépôt: 07731609.9
(22) Date de dépôt: 13.02.2007
(51) Int. Cl.: B62D 33/04

(54) **CARROSSERIE ALLONGEE D'UN VEHICULE AUTOMOBILE**
LÄNGLICHE KAROSSERIE EINES KRAFTFAHRZEUGES
ELONGATED BODY OF A MOTOR VEHICLE

(30) Priorité: 17.03.2006 FR 0650922
(43) Date de publication de la demande: 03.12.2008
(73) Titulaire: Peugeot Citroën Automobiles SA, 78140 Vélizy-Villacoublay (FR)
(72) Inventeur: BOUCHY, Laurent, F-91590 Baulne (FR)
(74) Mandataire: Allain, Laurent
(86) Numéro de dépôt international: PCT/FR2007/050784
(87) Numéro de publication internationale: WO 2007/116158

(56) Documents cités:
- EP-A- 0 338 999
- EP-B- 0 258 211
- FR-A- 2 771 697

## Description

La présente invention concerne une carrosserie allongée d'un véhicule automobile.

La présente invention s'applique plus particulièrement à des véhicules automobiles utilitaires fermés à l'arrière par deux portes ou un hayon. La carrosserie allongée est dérivée d'une carrosserie courte comprenant un pied de volet avec une feuillure en appui sur le côté de l'habitacle.

Afin de pouvoir proposer à la clientèle la plus grande diversité de variantes d'un modèle de véhicule automobile donné, on développe un modèle de base et on y ajoute des éléments complémentaires spécifiques pour la variante que l'on souhaite obtenir. Cette façon de procéder est particulièrement d'usage lorsqu'une variante d'un modèle de véhicule automobile ne représente qu'un faible pourcentage de la cadence journalière de fabrication.

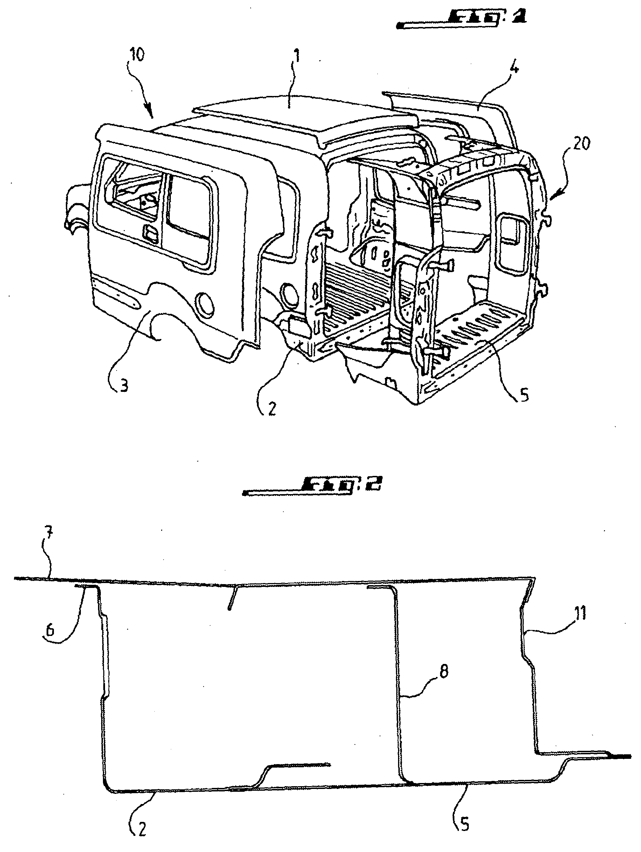

La figure 1 des dessins annexés représente cette conception d'usage à l'exemple d'un véhicule automobile utilitaire de type fourgonnette fermé à l'arrière par deux battants de porte. On voit sur cette vue en perspective très schématique une carrosserie courte 10 avec un pavillon 1, un anneau arrière de base 2, un panneau latéral gauche 3, un panneau latéral droit 4 (de façon symétrique). Cette carrosserie 10 est rallongée par un pied de volet long et spécifique 20 ayant son propre anneau arrière 5. De plus, la carrosserie allongée nécessite généralement la pose d'une cloison intermédiaire de rigidité pour parer à la torsion du caisson.

La figure 2 représente la solution classique en une coupe horizontale d'une partie droite de la carrosserie, vue dans le sens de la marche avant du véhicule. La partie droite du pied de volet 2 est en appui, moyennant une feuillure 6, sur le côté droit 7 de l'habitacle d'un véhicule automobile. Le pied de volet 2 est allongé vers l'arrière du véhicule automobile par une pièce d'extension du pied de volet 5. Pour parer la carrosserie contre une tension autour de l'axe longitudinal de la carrosserie, un raidisseur d'extension 8 est monté entre la pièce d'extension 5 et une extension 9 du côté d'habitacle. La figure 2 montre enfin aussi la position d'une gouttière 11.

Cette conception traditionnelle est assez coûteuse sous plusieurs aspects. En premier, les coûts pour la conception et la réalisation de l'outillage nécessaire pour produire les pièces d'extension sont très élevés, notamment par rapport à la production relativement faible pour laquelle ces outils sont utilisés. De plus, cette conception demande une logistique complexe dans le sens de la mise en stock puis du transport des pièces d'extension vers l'atelier ou le poste de montage. Ensuite, aussi bien en cas de montage robotisé qu'en cas de montage par mécanicien, les pièces d'extension demandent des manipulations particulières, spécifiques selon les pièces.

Pour cette raison, certains fabricants de véhicules automobiles et certains carrossiers ont recours à une technique hybride, c'est-à-dire les pièces d'extension sont collées sur la carrosserie de base et vissées sur celle-ci à des endroits préparés à cet effet. A la fin, la caisse ainsi rallongée est marouflée pour être peinte sur une petite ligne manuelle.

Cette technique hybride a l'avantage de ne pas déranger le rythme ou la cadence de fabrication des véhicules de base ; mais néanmoins, les coûts de fabrication et de logistique élevés ne sont pas réduits pour autant.

FR 2771697 A divulgue une carosserie selon le préambule de la revendication 1.

Le but de l'invention est de proposer une conception d'une carrosserie allongée qui permette de simplifier la fabrication de la carrosserie et qui permette notamment de réduire sensiblement les coûts de fabrication et de stockage des pièces d'extension et les coûts de main-d'oeuvre ou d'intervention de robots lors de la fabrication.

Le but de l'invention est atteint avec une carrosserie allongée d'un véhicule automobile utilitaire, la carrosserie allongée étant dérivée d'une carrosserie courte comprenant un pied de volet avec une feuillure en appui sur un côté d'habitacle.

Conformément à l'invention, la carrosserie allongée comprend un second pied de volet identique au premier pied de volet et espacé de celui-ci dans le sens longitudinal de la carrosserie, les deux pieds de volet étant reliés l'un à l'autre par un élément de liaison de pied de volet.

La carrosserie allongée selon l'invention est donc issue d'une modification de la feuillure en appui sur le côté d'habitacle, associée à une modification de la partie arrière du passage de roue arrière. Grâce à ces modifications, on obtient une reconduction du pied de volet en position longue et l'élimination de deux pièces spécifiques, complexes et chers, par l'utilisation d'une liaison de pied de volet simple et économique.

En effet, à la place des pièces spécifiques d'extension utilisées avant l'invention, la carrosserie allongée de l'invention utilise deux pieds de volet identiques axialement espacés l'un de l'autre selon la longueur souhaitée de l'allongement de la carrosserie.

Grâce à cette disposition de l'invention, l'outillage utilisé pour la carrosserie de base peut être utilisé aussi pour la partie d'allongement. Ainsi, il suffit de prévoir un seul outillage spécifique pour réaliser la liaison entre les deux pieds de volet successifs.

Sur le point de la stabilité de la carrosserie, les dispositions de l'invention apportent l'avantage de pouvoir reconduire une torsion de l'anneau arrière identique à la version courte ou de base de la carrosserie.

Selon une variante de réalisation de l'invention, les deux pieds de volets sont également reliés l'un à l'autre par une portion du côté d'habitacle, prolongé par une extension du côté d'habitacle.

Selon une autre variante de réalisation de l'invention, la partie arrière d'un passage de roue arrière comporte une extension vers le bas qui permet d'occulter une ouverture formée dans le premier pied de volet, ladite ouverture résultant de l'accostage du second pied de volet sur l'extension du côté d'habitacle.

En effet, dans la mesure où les premier et second pieds de volet sont identiques selon l'invention, leur découpe est conditionnée par leur accostage avec respectivement le côté d'habitacle et l'extension du côté d'habitacle, qui ont des formes différentes. Le côté d'habitacle présente un décrochement vers l'intérieur du véhicule à proximité de la partie arrière du passage de roue. Ce décrochement est prévu pour l'intégration du bouclier arrière (non représenté). Ce décrochement est relativement incliné au niveau du côté d'habitacle, tandis qu'il est relativement horizontal au niveau du décrochement.

Le but de l'invention est également atteint avec un véhicule automobile ayant une carrosserie allongée telle que décrite ci avant.

D'autres caractéristiques et avantages de la présente invention ressortiront de la description ci-après d'un mode de réalisation de l'invention. La description est faite en référence aux dessins annexés dans desquels :
- les figures 1 et 2 représentent le principe d'une carrosserie allongée de façon traditionnelle,
- la figure 3 représente les dispositions d'une carrosserie allongée selon l'invention et,
- la figure 4 montre, comme détail d'une carrosserie selon l'invention, une zone de modification de passage de roue arrière.

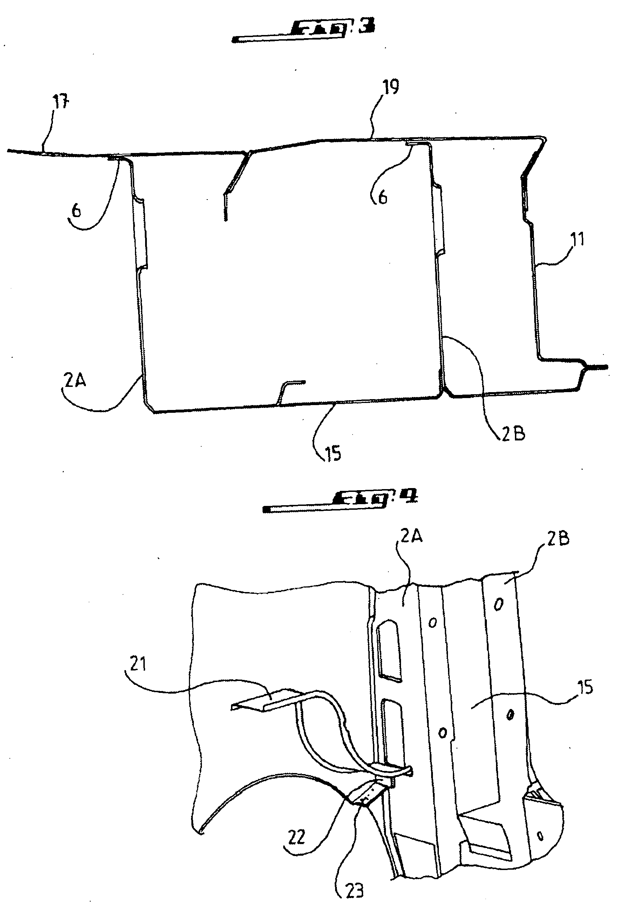

La figure 3 montre les dispositions de l'invention pour une carrosserie allongée dans une vue en coupe horizontale d'une partie droite de la carrosserie, l'avant de la carrosserie étant situé sur la gauche de la figure.

On observe donc tout d'abord que l'invention reprend une partie des dispositions antérieures représentées sur les figures 1 et 2. Ainsi, la carrosserie allongée comprend un premier pied de volet 2A et un panneau latéral formant un côté d'habitacle 17. Le pied de volet 2A est en appui, moyennant une feuillure 6, sur le côté droit 17 de l'habitacle du véhicule automobile.

De manière distinctive par rapport à la conception traditionnelle, la carrosserie allongée de l'invention comprend en outre un second pied de volet 2B identique au premier pied de volet 2A et disposé à une distance axiale de celui-ci, vers l'arrière du véhicule, ainsi qu'une pièce de liaison de pied de volet 15 intercalée entre les deux pieds de volet 2A, 2B.

Du côté de l'habitacle, on retrouve essentiellement la structure avant l'invention, c'est-à-dire la pièce de côté d'habitacle 17 est rallongée par une pièce d'extension de côté d'habitacle 19.

La figure 4 montre par extrait les deux pieds de volet 2A, 2B axialement espacés l'un de l'autre. La partie arrière d'un passage de roue arrière 21 présente une zone de modification 22 du passage de roue.

Selon l'invention, la partie arrière d'un passage de roue arrière 21 comporte une extension 22 vers le bas qui permet d'occulter (étancher) une ouverture formée dans le premier pied de volet 2A, ladite ouverture résultant de l'accostage du second pied de volet 2B sur l'extension du côté d'habitacle 19.

En effet, dans la mesure où les premier 2A et second 2B pieds de volet sont identiques selon l'invention, leur découpe est conditionnée par leur accostage avec respectivement le côté d'habitacle et l'extension du côté d'habitacle, qui ont des formes différentes. Le côté d'habitacle présente un décrochement 23 vers l'intérieur du véhicule à proximité de la partie arrière du passage de roue 21. Ce décrochement 23 est prévu pour l'intégration du bouclier arrière (non représenté). Ce décrochement 23 est relativement incliné au niveau du côté d'habitacle 17, tandis qu'il est relativement horizontal au niveau du décrochement correspondant de l'extension du côté d'habitacle 19. Ainsi, l'ouverture crée au niveau du premier pied de volet 2A est occultée par l'extension 22 du passage de roue arrière 21.

## Revendications

1. Carrosserie allongée d'un véhicule automobile utilitaire, la carrosserie allongée étant dérivée d'une carrosserie courte comprenant un premier pied de volet (2A) avec une feuillure (6) en appui sur un côté d'habitacle (17),
**caractérisée en ce qu'**elle comprend un second pied de volet (2B) identique au premier pied de volet (2A) et espacé de celui-ci (2A) dans le sens longitudinal de la carrosserie, les deux pieds de volet (2A, 2B) étant reliés l'un à l'autre par un élément de liaison de pied de volet (15).

2. Carrosserie selon la revendication 1, **caractérisée en ce que** les deux pieds de volets (2A, 2B) sont également reliés l'un à l'autre par une portion du côté d'habitacle (17), prolongé par une extension du côté d'habitacle (19).

3. Carrosserie selon la revendication 1, **caractérisée en ce que** la partie arrière d'un passage de roue arrière (21) comporte une extension (22) vers le bas qui permet d'occulter une ouverture formée dans le premier pied de volet (2A), ladite ouverture résultant de l'accostage du second pied de volet (2B) sur l'extension du côté d'habitacle (19).

4. Véhicule automobile, **caractérisé en ce qu'**il comprend une carrosserie selon l'une quelconque des revendications 1 ou 2.

## Claims

1. Elongated body of a utility motor vehicle, the elongated body being derived from a short body comprising a first tailgate pillar (2A) with a rebate (6) bearing on a side of the passenger compartment (17),
**characterized in that** it comprises a second tailgate pillar (2B) identical to the first tailgate pillar (2A) and spaced apart from the latter (2A) in the longitudinal direction of the body, the two tailgate pillars (2A, 2B) being linked to each other by a tailgate pillar link element (15).

2. Body according to Claim 1, **characterized in that** the two tailgate pillars (2A, 2B) are also linked to each other by a portion of the passenger compartment side (17), prolonged by an extension of the passenger compartment side (19).

3. Body according to Claim 1, **characterized in that** the rear part of a rear wheel arch (21) comprises a downward extension (22) which makes it possible to block off an opening formed in the first tailgate pillar (2A), said opening resulting from the attachment of the second tailgate pillar (2B) to the extension of the passenger compartment side (19).

4. Motor vehicle, **characterized in that** it comprises a body according to either of Claims 1 to 2.

## Patentansprüche

1. Längliche Karosserie eines Nutzkraftwagens, wobei die längliche Karosserie von einer kurzen Karosserie abgeleitet ist, die eine erste Klappenbasis (2A) mit einer Falz (6) in Anlage an einer Seite der Fahrgastzelle (17) umfasst,
**dadurch gekennzeichnet, dass** sie eine zweite Klappenbasis (2B) umfasst, die mit der ersten Klappenbasis (2A) identisch und davon in Längsrichtung der Karosserie beabstandet ist, wobei die beiden Klappenbasen (2A, 2B) durch ein Klappenbasisverbindungselement (15) miteinander verbunden sind.

2. Karosserie nach Anspruch 1, **dadurch gekennzeichnet, dass** die beiden Klappenbasen (2A, 2B) des Weiteren durch einen Seitenteil der Fahrgastzelle (17), die durch eine Verlängerung der Seite Fahrgastzellenseite (19) verlängert ist, miteinander verbunden sind.

3. Karosserie nach Anspruch 1, **dadurch gekennzeichnet, dass** der hintere Teil eines Hinterradlaufs (21) eine Verlängerung (22) nach unten aufweist, die es gestattet, eine in der ersten Klappenbasis (2A) gebildete Öffnung zu verdecken, die durch die Anlage des zweiten Klappenfußes (2B) an die Verlängerung der Fahrgastzellenseite (19) entsteht.

4. Kraftfahrzeug, **dadurch gekennzeichnet, dass** es eine Karosserie nach einem der Ansprüche 1 oder 2 umfasst.
